# EUROPÄISCHE PATENTSCHRIFT

(11) **EP 2 421 670 B1**
(45) Veröffentlichungstag und Bekanntmachung des Hinweises auf die Patenterteilung: **11.06.2014**
(21) Anmeldenummer: 10714292.9
(22) Anmeldetag: 20.04.2010
(51) Int. Cl.: B23B 27/16, F16B 33/06, C23C 18/32, C10M 103/06, C10M 113/08, C23C 18/16

(54) **Schraubenverbindungen auf Zerspanungswerkzeugen**
Screw connections on cutting tools
Raccords vissés sur des outils à enlèvement de copeaux

(30) Priorität: 21.04.2009 DE 102009002535
(43) Veröffentlichungstag der Anmeldung: 29.02.2012
(73) Patentinhaber: CeramTec GmbH, 73207 Plochingen (DE)
(72) Erfinder: ZITZLAFF, Wolfgang, 73230 Kirchheim/Teck (DE)
(74) Vertreter: Scherzberg, Andreas Hans
(86) Internationale Anmeldenummer: PCT/EP2010/055197
(87) Internationale Veröffentlichungsnummer: WO 2010/122022

(56) Entgegenhaltungen:
- EP-A1- 1 376 533
- EP-A1- 1 416 469
- EP-A2- 0 232 895
- WO-A1-03/013770
- WO-A1-2005/021192
- DE-A1- 10 239 451
- DE-A1-102008 001 857
- GB-A- 2 233 982
- GB-A- 2 433 770
- US-A- 5 792 727
- US-A1- 2008 132 433
- US-A1- 2008 269 086

## Beschreibung

Die Erfindung beschreibt eine Verbesserung bestimmter Eigenschaften von Schraubenverbindungen mit Schrauben und zugehörenden Gewindebohrungen auf Zerspanungswerkzeugen, die zur Zerspanung von meist metallischen Werkstoffen dienen.

DE 10 2008 001 857 A1 beschreibt ein Zerspanungswerkzeug zur Aufnahme von Schneidplatten zur spanabhebenden Bearbeitung von metallischen Werkstücken, mit einer als Plattensitz ausgebildeten Ausnehmung mit Plattensitzwänden und einem Plattensitzboden zur Aufnahme der Schneidplatte, wobei die Schneidplatte Seitenflächen aufweist, die im Einbauzustand der Schneidplatte auf dem Zerspanungswerkzeug parallel zu den Plattensitzwänden angeordnet sind und die Schneidplatte durch Spannmittel im Plattensitz befestig ist. Auf dem Plattensitzboden ist eine Schneidkörperunterlage durch eine Schraube befestigt. Zur Verlängerung der Lebensdauer des Zerspanungswerkzeugs wird vorgeschlagen, dass zwischen einer Plattensitzwand und einer Seitenfläche der Schneidplatte ein austauschbares Einlegestück angeordnet ist. Dieses Einlegestück ist in einer Ausführungsform mit Schrauben am Zerspanungswerkzeug befestigt. Die Spannmitttel der Schneidplatte im Plattensitz umfassen eine Spannpratze, die über eine Befestigungsschraube am Zerspanungswerkzeug befestigt ist. An Zerspanungswerkzeugen werden somit verschiedene Verschraubungen benutzt.

Die wichtigste Schraubenverbindung auf Zerspanungswerkzeugen ist die Befestigungsschraube der Spannpratze, die den zerspanenden Schneideinsatz, Schneidkörper oder Schneidplatte klemmt. Bei der Zerspanung von z. B. Gusseisenwerkstoffen, ohne die Verwendung von Kühlschmiermitteln, wird bei der Materialabtrennung sehr viel Wärme erzeugt, die nicht vollständig über die Späne abgeführt wird, sondern auch über den Schneidkörper in das Trägerwerkzeug des Zerspanungswerkzeugs und in die Spannpratze und andere Spannmittel abgeführt wird. Nach längerer Einsatzzeit erhitzen sich die Bauteile sehr stark, die Schmierfette werden weich, können sich verflüchtigen und die Schmierwirkung lässt nach. Gussstaub und Späne werden zudem vom flüssigen Fett aufgenommen. Die gesamte Verbindung verschmutzt im Laufe der Zeit und neigt schließlich zum Verharzen und Verkleben. Zudem ist nach einer gewissen Zerspanungszeit ein Wechsel des Schneidkörpers notwendig, welches durch Lösen der Schraubenverbindung der Spannpratze, Wechseln oder Drehen des Schneidkörpers und erneutes Schließen der Schraubenverbindung durchgeführt wird. Es ist hierbei auch meist nicht zu vermeiden, dass zwangsläufig auch Schmutz in die Schraubenverbindung gelangt. Dieses führt dazu, dass die Gängigkeit der Schraubenverbindung im Laufe der Zeit nachlässt oder gänzlich ausfällt.

Der Erfindung liegt die Aufgabe zugrunde, die Schraubenverbindungen so zu verbessern, dass die Verbindung nach langfristigem Einsatz in der Zerspanung unter extremen Einsatzbedingungen mit Schmutz, extremer Wärme, Feuchtigkeit, Oxidation und Wechsellasten problemlos und ohne überproportionalen Kraftaufwand wieder gelöst werden können.

Erfindungsgemäß wird diese Aufgabe durch die Merkmale der Schraubenverbindungen gemäß dem Anspruch 1 sowie der Verwendung gemäß Anspruch 9 als auch des Verfahrens gemäß dem Anspruch 7 gelöst.

Realisiert wird dieses durch die erfindungsgemäße Kombination und Verwendung von beschichteten, bevorzugt chemisch vernickelten Schrauben, und dadurch, dass die Schraubenverbindung bzw. die beiden Gewindepartner (Schrauben und Gewindebohrungen) mit geringen Mengen eines hitzbeständigen Fettes mit Keramikpulverpartikeln geschmiert sind. Die verwendeten Schrauben sind dabei zur Erzielung von Korrosionsbeständigkeit und Trockenschmiereigenschaften bevorzugt chemisch vernickelt und als Besonderheit sind in der Beschichtung zum Beispiel in der Nickelschicht zusätzlich PTFE (Polytetrafluorethylen) Partikel eingebettet. PTFE ist ein vollfluoriertes Polymer, welches allgemein unter dem Produktnamen Teflon von der Firma DuPont bekannt ist.

Die Einbettung von PTFE Partikeln hat den Vorteil, dass im Unterschied zu aufgebrachten Schmierstoffen der niedrige Reibwert um 0,1 dank der sehr homogen eingelagerten PTFE-Partikel beispielsweise über die gesamte Nickelschicht erhalten bleibt. Selbst bei mikroskopisch kleinem Abrieb treten immer neue PTFE-Partikel an die Oberfläche und gewährleisten somit die Schmiereigenschaften über die gesamte Lebensdauer der Schicht,

Diese Beschichtung mit Nickel unter Einlagerung von PTFE Partikeln wird auch als Nickel-PTFE-Dispersionsschicht bezeichnet, welche 20 - 30 Vol-% PTFE-Feinstpartikel in der Nickelmatrix eingelagert hat.

Die Zuhilfenahme eines hitzbeständigen Fettes mit ungiftigen Keramikpulverbestandteilen als Notlaufeigenschaften optimieren durch die niedrigen Reibungswerte zudem diese Schraubenverbindung und bieten neben der leichten Lösbarkeit eine schmutzabweisende Eigenschaft, die die Lebensdauer und Montagefreundlichkeit der Schraubenverbindung vergrößert. Eine hohe Zuverlässigkeit der eingesetzten Bauteile und eine damit verbundene Kundenzufriedenheit sind die Folgen.

Zum Stand der Technik gehört die Verwendung chemisch brünierter oder mit anderen Verfahren korrosionsbeständig gemachter Schrauben. Das chemische Vernickeln von Schrauben, Gewindestiften und anderen Konstruktionsbauteilen ist ein an sich bekannter Stand der Technik, deren Verwendung an Trägerwerkzeugen zur Zerspanung bzw. an Zerspanungswerkzeugen ist jedoch nicht bekannt. Die Verwendung von Schrauben, bei denen zusätzlich noch PTFE Partikel in der Nickelschicht eingebettet sind, ist bei Trägerwerkzeugen zur Zerspanung ebenfalls nicht bekannt. Das erfindungsgemäße Verfahren bietet zur Korrosionsbeständigkeit auch noch bessere Gleiteigenschaften der mechanischen Verbindungen.

Zum Stand der Technik bei Schraubenverbindungen auf Zerspanungswerkzeugen gehört außerdem die Verwendung von warmfesten Fetten, die durch die Einbettung von meist Kupferpartikeln eine Notschmiereigenschaft bieten sollen. Diese kupferhaltigen Fette sind sehr warmfest. Die Kupferpartikel bieten Notschmiereigenschaften, die entstehen, wenn durch hohe Betriebstemperaturen von 100° bis 400° die Schmiereigenschaft des Fettes in der Schraubenverbindung nachlässt, bzw. nicht mehr vorhanden ist. Anwendung finden dieses Fette z. B. im Automobil zum gangbar halten des Bremsbelages im Bremssattel bei Scheibenbremsanlagen.

Die Verwendung von chemisch vernickelten Bauteilen mit eingelagerten PTFE Partikeln, in Kombination mit einem hochwarmfesten Fett mit mikrofeinen Keramikpartikeln und dieses vorzugsweise genutzt bei Schraubenverbindungen, speziell bei Spannpratzen auf Zerspanungswerkzeugen, ist in dieser Funktionsweise neuartig. Es dient zur gezielten und kontrollierten Verminderung der Reibkräfte zwischen den einzelnen Bauteilen und besonders in der Schraubenverbindung. Diese Werkstoff- und Schmierstoffkombination zeichnet sich aus durch die hervorragenden Gleiteigenschaften und die im Langzeiteinsatz anhaltenden Notschmiereigenschaften. Zusätzlich wird durch die glatte Oberfläche der Beschichtung, sowie durch die Schmutz- und Feuchtigkeit abweisenden Eigenschaften des Fettes die Aufnahme von Schmutz und Späne, sowie eine Verharzung der Komponenten verhindert. Letztendlich ist ein Versagen der Funktionseigenschaften der Schraubenverbindung, auch unter schwierigen Einsatzbedingungen, vermeidbar. Die Lebensdauer dieser dynamischen Schraubenverbindung, die zusätzlich unter dem Einfluss von Zerspanungskräften, Wärme und Vibrationen stehen, wird heraufgesetzt. Die Wechselzyklen können verlängert werden, der Wartungsaufwand wird minimiert. Eine Kostensenkung durch sinkenden Bedarf an vorzeitig auszutauschenden Komponenten ist die Folge. Auch die Umweltbelastung durch geringere Verwendung von Schmierstoffen ist einer der Vorteile.

Nachfolgend wird die Erfindung weiter anhand der Merkmale der Ansprüche beschrieben.

Eine Schraubenverbindung mit Schrauben und zugehörenden Gewindebohrungen auf Zerspanungswerkzeugen ist erfindungsgemäß dadurch verbessert, dass die Schrauben zumindest im Bereich ihres Gewindes durch Beschichtung eine glatte Oberfläche aufweisen, in der Beschichtung PTFE Partikel, bevorzugt mit einer Partikelgröße zwischen 100 nm und 300 nm, enthalten sind und die Schraubenverbindung bzw. die beiden Gewindepartner (Schrauben und Gewindebohrungen) mit geringen Mengen eines hitzebeständigen Fettes mit Keramikpulverpartikeln geschmiert sind. Durch die glatte Beschichtung ist die Schraubenverbindung auch nach langem Gebrauch wieder zu lösen. Die PTFE Partikel gewährleisten die Schmiereigenschaften über die gesamte Lebensdauer der Schicht. Durch diese Maßnahmen kann die Schraubenverbindung mit einer Mindermengenschmierung versehen werden.

Die Dicke der Beschichtung ist kleiner als 25 µm, bevorzugt kleiner als 10 µm und liegt besonders bevorzugt zwischen 3 µm und 7 µm. Die Gleitreibungskoeffizienten der Schrauben im beschichteten Bereich liegen bevorzugt zwischen 0,05 und 0,07.

Die PTFE Partikel nehmen zwischen 20 und 30 Volumenprozent, bevorzugt 25 Volumenprozent an der Beschichtung ein. Hierdurch sind sowohl die Schmiereigenschaften als auch die Lösbarkeit der Schraubenverbindung in einem optimalen Verhältnis zueinander.

In bevorzugter Ausführungsform ist oder wird die glatte Oberfläche der Schrauben durch chemisches Vernickeln unter gleichzeitiger Einbindung von PTFE Partikeln in die Nickelschicht erzeugt. Das Resultat ist eine Einfach-Dispersionsschicht, welche die Härte des Nickels und die Gleiteigenschaften des PTFE in sich vereinigt. Eine Nickel-PTFE-Dispersionsschicht, welche ca. 25 Vol.-% PTFE Feinstpartikel in der Nickelmatrix eingelagert hat, gehört zum Stand der Technik.

In einer Ausführungsform ist in der Beschichtung Phosphor, bevorzugt 1 Gewichtsprozent Phosphor, enthalten.

Erfindungsgemäß sind die Schraubenverbindungen bzw. die beiden Gewindepartner (Schrauben und Gewindebohrungen) mit geringen Mengen eines Fettes mit Keramikpartikeln geschmiert.

Ein Verfahren zur Verbesserung der Schraubenverbindungen mit Schrauben und zugehörenden Gewindebohrungen auf Zerspanungswerkzeugen besteht darin, dass die Schrauben zumindest im Bereich ihres Gewindes beschichtet werden um eine glatte Oberfläche zu erhalten, in die Beschichtung PTFE Partikel, bevorzugt mit einer Partikelgröße zwischen 100 nm und 300 nm, eingebunden werden und die Schraubenverbindung bzw. die beiden Gewindepartner (Schrauben und Gewindebohrungen) mit geringen Mengen eines hitzebeständigen Fettes mit Keramikpulverpartikeln geschmiert sind.

In spezieller Ausführungsform werden die verwendeten Schrauben zur Beschichtung chemisch vernickelt unter gleichzeitiger Einbindung von PTFE Partikeln in die Nickelschicht und die Gewindepartner der Schraubenverbindungen mit einem hitzebeständigen Fett mit Keramikpulverbestandteilen geschmiert.

Die Erfindung bezieht sich auch auf einer Verwendung von zumindest im Gewindebereich beschichteten Schrauben, die in der Beschichtung PTFE Partikel aufweisen und mit geringen Mengen eines hitzebeständigen Fettes mit Keramikpulverpartikeln geschmiert sind, in Schraubenverbindungen auf Zerspanungswerkzeugen.

Bevorzugt in der Verwendung ist, dass chemisch vernickelte Schrauben verwendet werden, die in der Nickelschicht PTFE Partikel aufweisen.

Vorteilhaft wird zur Schmierung der Schraubenverbindungen hitzebeständiges Fett mit Keramikpulverbestandteilen verwendet.

Ein Zerspanungswerkzeug mit über Schraubenverbindungen befestigten Bauteilen und Schmierung der Gewindepartner dieser Schraubenverbindungen mit einem Fett besteht darin, dass die Schrauben der Schraubenverbindungen beschichtet sind und in der Beschichtung eingebettete PTFE Partikel aufweisen und die Gewindepartner der Schraubenverbindungen mit einem hitzebeständigen Fett mit Keramikpulverbestandteilen geschmiert sind.

Bevorzugt sind zur Beschichtung die Schrauben der Schraubenverbindungen chemisch vernickelt und weisen in der Nickelschicht eingebettete PTFE Partikel auf.

Schrauben zur Befestigung von Bauteilen an Zerspanungswerkzeugen sind unter gleichzeitiger Einbindung von PTFE Partikeln in der Beschichtung beschichtet.

Bevorzugt sind die Schrauben chemisch vernickelt unter gleichzeitiger Einbindung von PTFE Partikeln in der Nickelschicht.

Ein Fett zur Schmierung von Schraubenverbindungen auf Zerspanungswerkzeugen ist hitzebeständig und mit Keramikpulverbestandteilen versehen.

Die Schraubenverbindungen, das Verfahren zur Verbesserung der Schraubenverbindungen, die Verwendung, das Zerspanungswerkzeug und die Schrauben sind derart ausgeführt, dass die Schraubenverbindungen die Spannpratzenschraubenverbindungen, die Stützplattenbefestigungen, die Schneidkörperadapterbefestigung oder Kassetten- und Stechschwertbefestigungen umfassen.

Nachfolgend wird die Erfindung anhand eines Ausführungsbeispiels in verschiedenen Figuren als Ansichten und Schnitten weiter erläutert.

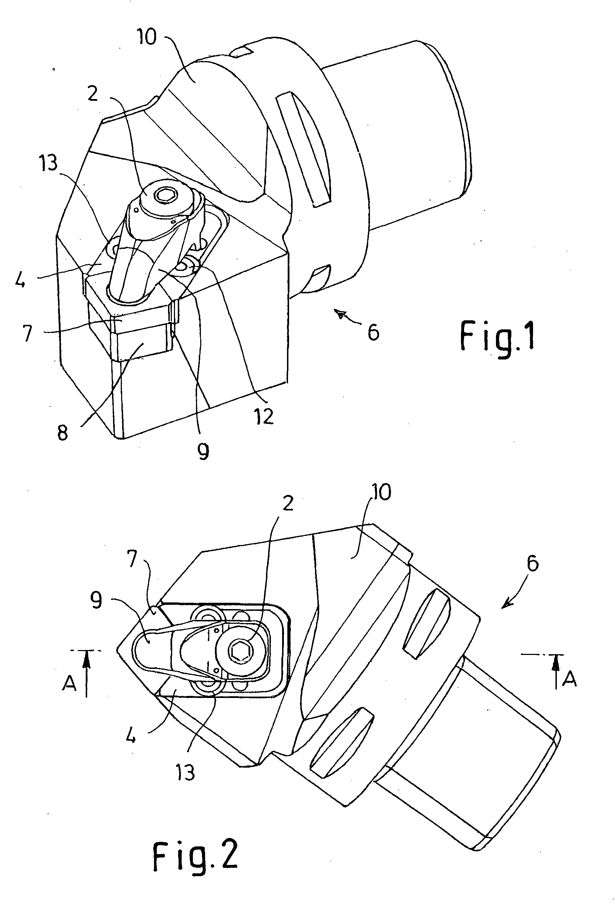

Die Figuren 1, 2, 3, 4 zeigen ein erfindungsgemäßes Zerspanungswerkzeug 6 mit aufgesetztem Schneidkörperadapter 4, in dem ein Schneidkörper 7 (hier eine Wendeschneidplatte) auf einer Stützplatte 8 eingesetzt ist. Die Befestigung erfolgt über eine Spannpratze 9. Diese ist über eine Schraube 2 auf dem Zerspanungswerkzeug 6 bzw. dem Trägerwerkzeug 10 befestigt. In den Figuren ist diese Spannpratzenschraubenverbindung mit dem Bezugszeichen 11 gekennzeichnet. Auch die Stützplatte 8 ist über eine Schraube 2 auf dem Zerspanungswerkzeug 6 bzw. dem Trägerwerkzeug 10 befestigt. In den Figuren ist diese Stützplattenbefestigung mit dem Bezugszeichen 12 gekennzeichnet.

Der Schneidkörperadapter 4 ist auswechselbar und ist in einer dafür geeigneten Tasche oder Ausnehmung auf dem Trägerwerkzeug 10 aufgenommen, gehalten und geführt. In den Figuren ist diese Schneidkörperadapterbefestigung mit dem Bezugszeichen 13 gekennzeichnet. Hierzu sind im Schneidkörperadapter 4 Bohrungen eingebracht, durch die Schrauben 2 geführt sind. Diese Schrauben sind in Gewindebohrungen im Boden, auf dem der Schneidkörperadapter 4 aufsitzt, eingeschraubt. Die Außenform des Schneidkörperadapters 4 ist dabei in seiner Form und Ausrichtung den Seitenwänden der Tasche auf dem Trägerwerkzeug 10 angepasst. Die Innenform des Adapters 1 ist wiederum eine Tasche oder Ausnehmung, dessen Form und Ausrichtung so beschaffen ist, wie es der zu verwendende Schneidkörper 7, bzw. die Wendeschneidplatte erfordert. Diese Tasche oder Ausnehmung ist nahezu identisch mit den Taschen oder Ausnehmungen auf sonst handelsüblichen Trägerwerkzeugen ohne diesen Schneidkörperadapter, welcher sich zwischen Schneidkörper 7 und Trägerwerkzeug 10 befindet. Der Schneidkörper 7 wird dabei an 3 zueinander winkelig stehenden Wänden oder Flächen eingebettet und hat hierdurch keinen direkten Kontakt mehr zum Trägerwerkzeug 10.

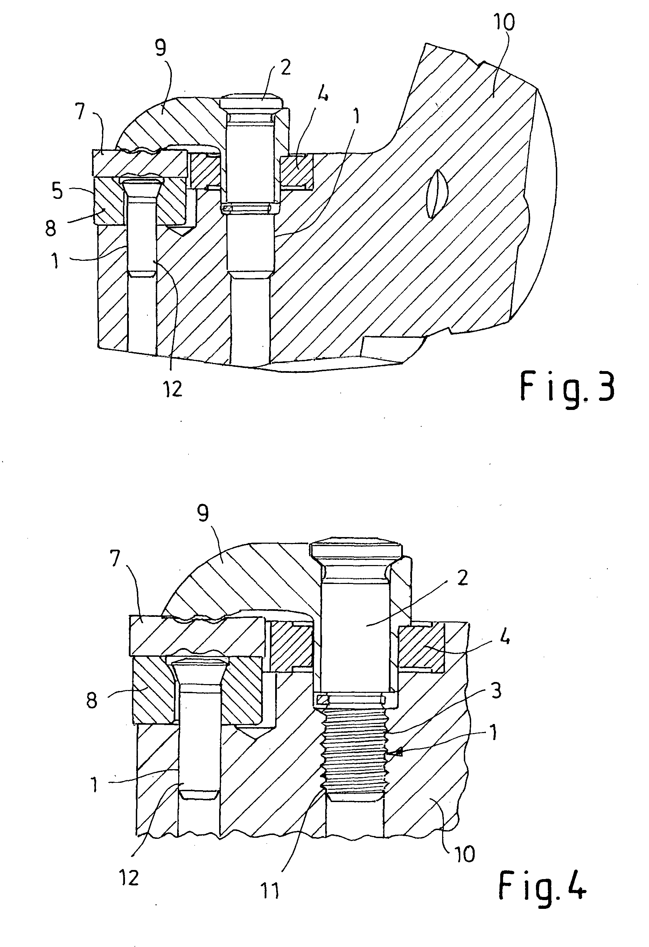

Wie in den Figuren 3 und 4 gezeigt, ist in dem Schneidkörper 7, auch als Schneidplatte oder Wendeschneidplatte bezeichnet, eine Mulde eingebracht, wie sie in der WO 03/013770 A1 beschrieben ist Die Mulde ist kreisförmig ausgebildet und weist in der Mitte eine kugel- bzw. kreisförmige Erhebung auf. Die Spitze der Erhebung liegt oberhalb des Muldenbodens und unterhalb der Schneidplattenoberseite. Zum Einspannen auf dem Trägerwerkzeug greift eine Spannpratze 9 als Befestigungsmittel mit an die Mulde angepasster geformter Nase formschlüssig in die Mulde des Schneidkörpers 7 ein. Diese Mulde dient zur formschlüssigen Spannung auf dem Trägerwerkzeug. Besonders für ziehende Schnitte, bei dem der Schneidkörper 7 durch die wirkenden Schnittkräfte aus seinem Sitz gezogen werden könnte, bietet sich dieser Schneidkörper 7 mit der besonderen Mulde an. Zur weiteren Beschreibung dieser Mulde siehe die genannte Druckschrift.

Zur Befestigung des Schneidkörperadapters 4 in der Tasche des Trägerwerkzeugs 10 mittels Schrauben sind im Boden, auf dem der Schneidkörperadapter aufliegt, Gewindebohrungen eingebracht.

Damit Läpp- oder Schleifbearbeitungen der Schneidkörperoberseiten die Klemmeigenschaften des Schneidkörpers 7 nicht beeinflussen, ist in einer Ausführungsform die Mulde so ausgebildet, wie es in der EP 1 536 903 B1 beschrieben ist. In diesem Fall ist eine erste Spannmulde zum Einspannen in das Schneidwerkzeug eingebracht und ist koaxial zur ersten Spannmulde eine zweite Spannmulde angeordnet, wobei die erste Spannmulde tiefer als die zweite Spannmulde und beide tiefer als die Schneidplattenoberseite angeordnet sind. Beim Klemmen des Schneidkörpers 7 liegt die Spannpratze 9 auf der zweiten Spannmulde auf und greift mit einer Nase in die erste Spannmulde ein. Der Abstand von der Auflagefläche der Spannpratze 9 zur Mulde ist damit immer konstant und ist nicht abhängig von Läpp- oder Schleifbearbeitungen der Schneidplattenoberseiten.

In einer Ausführungsform besteht der Schneidkörper 7 aus PCBN oder aus CBN. Beschrieben ist dies in der WO 2005/021192 A1. Die Spannmulde kann wieder kreisförmig ausgebildet sein und in der Mitte eine kugel- bzw. kreisförmige Erhebung aufweisen, wie eben beschrieben. Die entsprechende Kontur der Spannmulde ist bevorzugt durch Laserbearbeitung oder über eine entsprechende Formgebung des Grünkörpers eingebracht und der so hergestellte Grünkörper wird dann getrocknet und gesintert.

Erfindungsgemäß weisen die Schrauben 2 zumindest im Bereich ihres Gewinde 3 durch Beschichtung eine glatte Oberfläche auf und sind die Schraubenverbindung bzw. die beiden Gewindepartner (Schrauben und Gewindebohrungen) mit geringen Mengen eines hitzebeständigen Fettes mit Keramikpulverpartikeln geschmiert sind.

Diese Schraubenverbindungen 1 umfassen zum Beispiel die Spannpratzenschraubenverbindungen 11 (siehe Figur 4), die Stützplattenbefestigungen 12 (siehe Figuren 3 und 4), die Schneidkörperadapterbefestigungen 13 (siehe Figuren 1 und 2) oder Kassetten- und Stechschwertbefestigungen.

## Patentansprüche

1. Schraubenverbindungen (1) mit Schrauben (2) und zugehörenden Gewindebohrungen auf Zerspanungswerkzeugen (6), **dadurch gekennzeichnet, dass** die Schrauben (2) zumindest im Bereich ihres Gewindes (3) durch Beschichtung eine glatte Oberfläche aufweisen, in der Beschichtung PTFE Partikel, bevorzugt mit einer Partikelgröße zwischen 100 nm und 300 nm, enthalten sind und die Schraubenverbindung (1) bzw. die beiden Gewindepartner bildenden Schrauben und Gewindebohrungen mit geringen Mengen eines hitzebeständigen Fettes mit Keramikpulverpartikeln geschmiert sind.

2. Schraubenverbindungen nach Anspruch 1, **dadurch gekennzeichnet, dass** die Dicke der Beschichtung kleiner als 25 µm, bevorzugt kleiner als 10 µm ist und besonders bevorzugt zwischen 3 µm und 7 µm liegt.

3. Schraubenverbindungen nach Anspruch 1 oder 2, **dadurch gekennzeichnet, dass** die Gleitreibungskoeffizienten der Schrauben im beschichteten Bereich zwischen 0,05 und 0,07 liegt.

4. Schraubenverbindungen nach einem der Ansprüche 1 bis 3, **dadurch gekennzeichnet, dass** die PTFE Partikel zwischen 20 und 30 Volumenprozent, bevorzugt 25 Volumenprozent an der Beschichtung einnehmen.

5. Schraubenverbindungen nach einem der Ansprüche 1 bis 4, **dadurch gekennzeichnet, dass** die glatte Oberfläche der Schrauben (2) durch chemisches Vernickeln unter gleichzeitigem Einbindung von PTFE Partikeln in die Nickelschicht erzeugt ist.

6. Schraubenverbindungen nach einem der Ansprüche 1 bis 5, **dadurch gekennzeichnet, dass** in der Beschichtung Phosphor, bevorzugt 1 Gewichtsprozent, enthalten ist.

7. Verfahren zur Verbesserung der Schraubenverbindungen (1) mit Schrauben (2) und zugehörenden Gewindebohrungen auf Zerspanungswerkzeugen (6), **dadurch gekennzeichnet, dass** die Schrauben (2) zumindest im Bereich ihres Gewindes (3) beschichtet werden um eine glatte Oberfläche zu erhalten, in die Beschichtung PTFE Partikel, bevorzugt mit einer Partikelgröße zwischen 100 nm und 300 nm, eingebunden werden und die Schraubenverbindung (1) bzw. die beiden Gewindepartner bildenden Schrauben und Gewindebohrungen mit geringen Mengen eines hitzebeständigen Fettes mit Keramikpulverpartikeln geschmiert sind.

8. Verfahren nach Anspruch 7, **dadurch gekennzeichnet, dass** die verwendeten Schrauben (2) zur Beschichtung chemisch vernickelt werden unter gleichzeitiger Einbindung von PTFE Partikeln in die Nickelschicht.

9. Verwendung von zumindest im Gewindebereich beschichteten Schrauben (2), die in der Beschichtung PTFE Partikel aufweisen und mit geringen Mengen eines hitzebeständigen Fettes mit Keramikpulverpartikeln geschmiert sind, in Schraubenverbindungen (1) auf Zerspanungswerkzeugen (6).

10. Verwendung nach Anspruch 9, **dadurch gekennzeichnet, dass** chemisch vernickelte Schrauben verwendet werden, die in der Nickelschicht PTFE Partikel aufweisen.

11. Verwendung nach Anspruch 9 oder 10, **dadurch gekennzeichnet, dass** zur Schmierung der Schraubenverbindungen (1) hitzebeständiges Fett mit Keramikpulverbestandteilen verwendet wird.

## Claims

1. Screw connections (1) having screws (2) and associated threaded bores on cutting tools (6), **characterised in that** the screws (2) at least in the region of their thread (3) have a smooth surface as a result of being coated, PTFE particles, preferably having a particle size between 100 nm and 300 nm, are contained in the coating, and the screw connection (1), or screws and threaded bores constituting the two thread partners, is/are lubricated with small quantities of a heat-resistant grease having ceramic powder particles.

2. Screw connections according to claim 1, **characterised in that** the thickness of the coating is less than 25 µm, preferably less than 10 µm and particularly preferably between 3 µm and 7 µm.

3. Screw connections according to claim 1 or 2, **characterised in that** the coefficient of sliding friction of the screws in the coated region lies between 0.05 and 0.07.

4. Screw connections according to one of claims 1 to 3, **characterised in that** the PTFE particles take up between 20 and 30 percent by volume, preferably 25 percent by volume, of the coating.

5. Screw connections according to one of claims 1 to 4, **characterised in that** the smooth surface of the screws (2) is produced by chemical nickel-plating with simultaneous incorporation of PTFE particles in the nickel layer.

6. Screw connections according to one of claims 1 to 5, **characterised in that** phosphorus, preferably 1 percent by weight, is contained in the coating.

7. Method for improving the screw connections (1) having screws (2) and associated threaded bores on cutting tools (6), **characterised in that** the screws (2) are coated at least in the region of their thread (3) in order to obtain a smooth surface, PTFE particles, preferably having a particle size between 100 nm and 300 nm, are incorporated in the coating, and the screw connection (1), or screws and threaded bores constituting the two thread partners, is/are lubricated with small quantities of a heat-resistant grease having ceramic powder particles.

8. Method according to claim 7, **characterised in that** the screws (2) that are used are chemically nickel-plated for coating purposes with simultaneous incorporation of PTFE particles in the nickel layer.

9. Use of screws (2), which are coated at least in the threaded region, have PTFE particles in the coating and are lubricated with small quantities of a heat-resistant grease having ceramic powder particles, in screw connections (1) on cutting tools (6).

10. Use according to claim 9, **characterised in that** chemically nickel-plated screws are used that have PTFE particles in the nickel layer.

11. Use according to claim 9 or 10, **characterised in that** heat-resistant grease having ceramic-powder constituents is used to lubricate the screw connections (1).

## Revendications

1. Raccords vissés (1) avec des vis (2) et des trous filetés correspondants sur des outils d'usinage par enlèvement de copeaux (6), **caractérisés en ce que** les vis (2) présentent, au moins dans la zone de leur filetage (3), une surface lisse obtenue par revêtement, le revêtement contient des particules de PTFE, de préférence avec une taille de particules comprise entre 100 nm et 300 nm, et le raccord vissé (1), respectivement les vis et trous filetés formant les deux partenaires de filetage, sont lubrifiés avec de faibles quantités d'une graisse résistante à la chaleur contenant des particules de poudre de céramique.

2. Raccords vissés selon la revendication 1, **caractérisés en ce que** l'épaisseur du revêtement est inférieure à 25 µm, de préférence inférieure à 10 µm et, en particulier, de préférence comprise entre 3 µm et 7 µm.

3. Raccords vissés selon la revendication 1 ou 2, **caractérisés en ce que** le coefficient de frottement dynamique des vis dans la zone revêtue est compris entre 0,05 et 0,07.

4. Raccords vissés selon l'une des revendications 1 à 3, **caractérisés en ce que** les particules de PTFE occupent entre 20 et 30 pour cent en volume, de préférence 25 pour cent en volume, du revêtement.

5. Raccords vissés selon l'une des revendications 1 à 4, **caractérisés en ce que** la surface lisse des vis (2) est obtenue par nickelage chimique avec incorporation simultanée de particules de PTFE dans la couche de nickel.

6. Raccords vissés selon l'une des revendications 1 à 5, **caractérisés en ce que** le revêtement contient du phosphore, de préférence dans une proportion de 1 pour cent en poids.

7. Procédé d'amélioration des raccords vissés (1) avec des vis (2) et des trous filetés correspondants sur des outils d'usinage par enlèvement de copeaux (6), **caractérisé en ce que** les vis (2) sont revêtues au moins dans la zone de leur filetage (3) afin d'obtenir une surface lisse, des particules de PTFE, de préférence avec une taille de particules comprise entre 100 nm et 300 nm sont incorporées dans le revêtement, et le raccord vissé (1), respectivement les vis et trous filetés formant les deux partenaires de filetage, sont lubrifiés avec de faibles quantités d'une graisse résistante à la chaleur contenant des particules de poudre de céramique.

8. Procédé selon la revendication 7, **caractérisés en ce que**, pour le revêtement, les vis (2) utilisées sont nickelées chimiquement avec incorporation simultanée de particules de PTFE dans la couche de nickel.

9. Utilisation de vis (2) revêtues au moins dans la zone de filetage, lesquelles comportent des particules de PTFE dans le revêtement et sont lubrifiées avec de faibles quantités d'une graisse résistante à la chaleur contenant des particules de poudre de céramique, dans des raccords vissés (1) sur des outils d'usinage par enlèvement de copeaux (6).

10. Utilisation selon la revendication 9, **caractérisée en ce que** des vis nickelées chimiquement, présentant des particules de PTFE dans la couche de nickel, sont utilisées.

11. Utilisation selon la revendication 9 ou 10, **caractérisée en ce qu'**une graisse résistante à la chaleur contenant des particules de poudre de céramique est utilisée pour lubrifier les raccords vissés (1).
